# EUROPÄISCHE PATENTSCHRIFT

(11) **EP 0 857 160 B1**
(45) Veröffentlichungstag und Bekanntmachung des Hinweises auf die Patenterteilung: **28.07.1999**
(21) Anmeldenummer: 96945521.1
(22) Anmeldetag: 22.10.1996
(51) Int. Cl.: C01F 11/18

(54) **MIKRONISIERTES ERDALKALIMETALLCARBONAT**
MICRONIZED ALKALINE EARTH METAL CARBONATE
CARBONATE DE METAL ALCALINO-TERREUX MICRONISE

(30) Priorität: 26.10.1995 DE 19539813; 21.12.1995 DE 19548131
(43) Veröffentlichungstag der Anmeldung: 12.08.1998
(73) Patentinhaber: SOLVAY BARIUM STRONTIUM GmbH, D-30173 Hannover (DE)
(72) Erfinder: MINGELS, Norbert, D-46535 Dinslaken (DE); KÖHLER, Karl, D-31199 Diekholzen (DE); PARK, Jai, Won, D-37085 Göttingen (DE); GABEL, Hans, D-53547 Kasbach (DE)
(74) Vertreter: Lauer, Dieter, Dr.
(86) Internationale Anmeldenummer: DE9602006
(87) Internationale Veröffentlichungsnummer: WO9715530

(56) Entgegenhaltungen:
- FR-A- 2 261 227
- US-A- 2 058 503
- US-A- 2 964 382
- US-A- 3 920 800
- DATABASE WPI Section Ch, Week 8204 Derwent Publications Ltd., London, GB; Class A60, AN 82-06538E XP002028686 & JP 56 160 322 A (SHIRAISHI CHUO KENK) , 10.Dezember 1981
- DATABASE WPI Section Ch, Week 7922 Derwent Publications Ltd., London, GB; Class A60, AN 79-41519B XP002028687 & JP 54 050 499 A (OKUTAMA KOGYO KK) , 20.April 1979
- PATENT ABSTRACTS OF JAPAN vol. 9, no. 91 (C-277) [1814] , 19.April 1985 & JP 59 223225 A (SHIRAISHI CHO KENKYUSHO K.K.), 15.Dezember 1984,

## Beschreibung

Die Erfindung bezieht sich auf ein partikelförmiges Erdalkalimetallcarbonat, seine Herstellung und seine Verwendung.

Bariumcarbonat beziehungsweise Strontiumcarbonat werden für viele technische Zwecke eingesetzt, beispielsweise als Ausgangsmaterial zur Synthese anderer Strontium- und Bariumverbindungen. Die Carbonate eignen sich auch für den Einsatz in Feststoffreaktionen, beispielsweise für die Herstellung von oxidhaltigen Keramikmaterialien für elektrische und magnetische Anwendungen, z. B. für die Herstellung von Thermistoren, Kondensatoren; sie werden für die Herstellung von Glas eingesetzt und für die Herstellung von Hochtemperatur-Supraleitermaterial.

Die japanische Patentanmeldung 7/025611 offenbart ein mikronisiertes Bariumcarbonat, welches eine Oberfläche von 5 bis 25 m²/g aufweist. Zwecks Herstellung leitet man eine wäßrige Bariumhydroxid-Lösung, der Kohlendioxid zugesetzt wird, durch drei hintereinandergeschaltete Pumpen und fügt dem, die dritte Pumpe verlassenden Reaktionsprodukt noch eine Carbonsäure oder ein Carbonsäurederivat wie Carboxymethylcellulose zu, wodurch das Kristallwachstum verhindert werden soll.

Aufgabe der vorliegenden Erfindung ist es, ein effektives Verfahren zur Herstellung eines partikelförmigen mikronisierten Bariumcarbonats und Strontiumcarbonats mit enger Kornverteilung anzugeben. Diese Aufgabe wird durch das erfindungsgemäße Verfahren gelöst.

Das erfindungsgemäße Verfahren zur Herstellung von partikelförmigem Erdalkalicarbonat EaCO₃, wobei Ea für Sr oder Ba steht, sieht vor, daß man eine Ea(OH)₂-Lösung mit einer Konzentration von 0,1 bis 0,75 mol/l an Ea(OH)₂ mit Kohlendioxid unter Bildung eines Reaktionsgemisches versetzt, wobei man pro Liter Lösung etwa 2 bis 30 1 Kohlendioxid-Gas einsetzt, das Reaktionsgemisch durch einen kontinuierlich arbeitenden Mischreaktor leitet, in welchem Scher-, Schub- und Reibungskräfte von ineinandergreifenden Werkzeugen mit hoher Relativgeschwindigkeit nach dem Rotor-Stator-Prinzip auf die Reaktionsmischung einwirken, man aus dem Reaktionsgemisch nach Passieren des Reaktors das gebildete Erdalkalicarbonat abtrennt und trocknet. Die Scher-, Schub- und Reibungskräfte im Reaktor bewirken, daß das Kohlendioxid in äußerst fein verteilter Form in die Erdalkalimetallhydroxid-Lösung eingetragen wird. Dabei bezieht sich die Liter-Angabe des Kohlendioxid-Gases auf Normalbedingungen.

Bei der Durchführung des erfindungsgemäßen Verfahrens wird mikronisiertes Erdalkalimetallcarbonat erhalten, bei welchem mindestens 90 % der Partikel einen Durchmesser im Bereich von 0,1 bis 1,0 µm, vorzugsweise im Bereich von 0,2 bis 1,0 µm aufweisen, wenn es sich um Bariumcarbonat oder Strontiumcarbonat handelt. Bei Bariumcarbonat liegt die BET-Oberfläche im Bereich von 3 bis 30 m²/g, vorzugsweise 3 bis 20 m²/g, insbesondere 8 bis 15 m²/g. Bei Strontiumcarbonat liegt die Oberfläche im Bereich von 3 bis 50 m²/g.

Das erfindungsgemäße Verfahren ist sehr effektiv. Es wird nämlich nur ein Reaktor benötigt, um praktisch quantitativen Umsatz zu erzielen. Im Verfahren des Standes der Technik werden drei Pumpen hintereinander eingesetzt.

Sehr gut geeignet sind Vorrichtungen, in denen der Rotor mit hoher Drehzahl rotiert. Die Rotordrehzahl beträgt vorzugsweise 2.000 bis 8.000 Umdrehungen/sec. Die Verweilzeit der Reaktionsmischung in der Misch- und Homogenisiereinrichtung beträgt vorzugsweise bis 5 sec.

Auf diese Weise kann z. B. BaCO₃ hergestellt werden, wobei 90 % und mehr der Partikel einen Durchmesser im Bereich von 0,2 bis 0,7 µm aufweisen.

Die Bestimmung der BET-Oberfläche erfolgte mit einem zur Messung von Mikroporen fähigen Gerät der Firma Micro Meritics. Adsorptionsgas war N₂, die Messung erfolgte bei der Temperatur des flüssigen Stickstoffes im Bereich von 0,01 - 0,1 Pᵣₑₗ unter Verwendung der BET-Gleichung.

Gemäß einer Ausführungsform der Erfindung arbeitet man ohne Zusatz eines Kristallwachstumsverhinderungsmittels. Diese Ausführungsform wird im Hinblick auf die bevorzugte Herstellung von BaCO₃ weiter erläutert.

Vor dem Trocknen, das zweckmäßig im Bereich von 100 bis 120 °C durchgeführt wird, kann man das sofort nach dem Passieren des Reaktors abgetrennte Bariumcarbonat ein- oder mehrmals mit Wasser waschen.

Die Fällung von Bariumcarbonat in der mit Kohlendioxid versetzten Bariumhydroxid-Lösung wird zweckmäßig bei einer Temperatur im Bereich von 40 bis 130 °C durchgeführt.

Ein Zusatz von Mitteln, welche das Kristallwachstum der den Homogenisator verlassenden Reaktionsmischung verhindern sollen, erfolgt nicht; das Carbonat wird sofort nach dem Verlassen des Reaktors abgetrennt.

Ein weiterer Gegenstand der Erfindung ist das partikelförmige Bariumcarbonat, welches nach dem erfindungsgemäßen Verfahren erhältlich ist und eine BET-Oberfläche im Bereich von 3 bis 30 m²/g, vorzugsweise von 3 bis 20 m²/g, insbesondere von 8 bis 15 m/g aufweist, bei welchem mindestens 90 % der Partikel einen Durchmesser im Bereich von 0,2 bis 1,0 µm aufweisen, und welches frei von das Kristallwachstum verhindernden Mitteln ist.

Ein Gegenstand der Erfindung ist auch partikelförmiges Strontiumcarbonat mit einer BET-Oberfläche im Bereich von 3 bis 50 m²/g, wobei mindestens 90 % der Teilchen einen Durchmesser im Bereich von 0,1 bis 1,0 µm aufweisen, erhalten nach dem erfindungsgemäßen Verfahren, und welches frei von das Kristallwachstum verhindernden Mitteln ist.

Eine weitere Ausführungsform sieht vor, daß man vor, während und/oder nach der Umsetzung im Reaktor dem Reaktionsgemisch ein das Kristallwachstum verhinderndes Mittel zusetzt. Auch bei dieser Ausführungsform kann man Strontium- bzw. Bariumcarbonat mit der obenerwähnten Charakteristik der Partikeldurchmesser und spezifischen BET-Oberflächen herstellen. Anhand dieser bevorzugten Ausführungsform wird es weiter erläutert; dabei werden spezielle Kristallwachstumsverhinderungsmittel eingesetzt, die bevorzugt sind. Brauchbar wären auch die Säuren selbst oder z. B. Alkalimetallsalze.

Die Partikel fallen stäbchenförmig an. Die Angabe des Durchmessers der Partikel bezieht sich auf die Länge der Stäbchen.

Das bevorzugte erfindungsgemäße Verfahren zur Herstellung von partikelförmigem Bariumcarbonat mit einer BET-Oberfläche im Bereich von 3 bis 30 m²/g, vorzugsweise 3 bis 20 m²/g und Strontiumcarbonat mit einer BET-Oberfläche im Bereich von 3 bis 50 m²/g, wobei mindestens 95 %, vorzugsweise mindestens 99 %, insbesondere 100 % der Partikel einen Durchmesser ≤ 1,0 µm aufweisen, sieht vor, daß man unter Verwendung eines das Kristallwachstum verhindernden Mittels ausgewählt aus der Gruppe der Ammoniumsalze und der Alkylammoniumsalze von Carbonsäuren, die insgesamt 3 bis 12 C-Atome aufweisen sowie mindestens 2 COOH-Gruppen oder mindestens 2 OH-Gruppen, eine Bariumhydroxid-Lösung oder Strontiumhydroxid-Lösung mit einer Konzentration von 0,1 bis 0,75 mol/l an Ba(OH)₂ beziehungsweise Sr(OH)₂ mit Kohlendioxid unter Bildung eines Reaktionsgemisches versetzt, wobei man pro Liter Lösung etwa 2 bis 30 l Kohlendioxid-Gas einsetzt, das Reaktionsgemisch durch einen Mischreaktor leitet, in welchem Scher-, Schub- und Reibungskräfte auf die Reaktionsmischung einwirken. Die Scher-, Schub- und Reibungskräfte im Reaktor bewirken, daß das Kohlendioxid in äußerst fein verteilter Form in die Barium- oder Strontiumhydroxid-Lösung eingetragen wird. Dabei bezieht sich die Liter-Angabe (bevorzugt sind in den Verfahren 10 bis 20 l) des Kohlendioxid-Gases auf Normalbedingungen. Wenn 100 % aller Partikel einen Durchmesser von ≤ 1 µm besitzen, besagt das, daß allenfalls ganz geringe unerwünschte Mengen, z. B. weniger als 0,1 % der Partikel, einen Durchmesser > 1 µm aufweisen.

Das das Kristallwachstum verhindernde Mittel wird mindestens in derjenigen Menge eingesetzt, die bewirkt, daß das Kristallwachstum des Bariumcarbonats und Strontiumcarbonats derart eingeschränkt wird, daß mindestens 99 % der Partikel einen Durchmesser von ≤ 1 µm, z. B. im Bereich von 0,2 bis 1,0 µm aufweisen. Die Menge des Mittels beträgt zweckmäßig mindestens 0,01 Gew.-%, vorzugsweise mindestens 0,1 Gew.-% bezogen auf das als 100 Gew.-% gesetzte BaCO₃ beziehungsweise SrCO₃ (Trockensubstanz). Sie kann beispielsweise im Bereich von 0,01 bis 5 Gew.-%, bezogen auf das als 100 Gew.-% gesetzte Bariumcarbonat beziehungsweise Strontiumcarbonat, liegen. Bevorzugt wird das die Kristallisation beeinflussende Carbonsäuresalz in einer Menge von 0,2 bis 0,7 Gew.-%, bezogen auf das als 100 Gew.-% gesetzte Bariumcarbonat beziehungsweise Strontiumcarbonat, eingesetzt. Da man das Carbonsäuresalz vor, während oder nach der Carbonisierung einsetzen kann, kann man zur Berechnung der Carbonat-Menge, auf welche man die Carbonsäuresalz-Menge bezieht, so vorgehen, daß man von einem 100 %igen Umsatz des eingesetzten Bariumhydroxids beziehungsweise Strontiumhydroxids ausgeht.

Besonders bevorzugt setzt man Ammoniumsalze der Carbonsäure ein. Man kann aber auch Alkylammoniumsalze der Carbonsäure einsetzen; es kann sich um primäre, sekundäre, tertiäre und quartäre Alkylammoniumsalze handeln. Geeignet sind beispielsweise primäre, sekundäre und tertiäre Ammoniumkationen, wobei das Stickstoff-Atom durch Alkylgruppen mit insgesamt bis zu 18 C-Atomen substituiert ist. Einsetzbar sind z. B. Methyl-, Dimethyl-, Trimethyl-, Ethyl-, Diethyl-, Triethyl-, n-Propyl-, Di-n-propyl- und Tri-n-propylammoniumsalze sowie Ammoniumkationen mit verschiedenen Alkyl-Gruppen als Substituenten.

Eingesetzt werden wie gesagt Salze von Carbonsäuren mit insgesamt 3 bis 12 C-Atomen, vorzugsweise 3 bis 6 C-Atomen; die C-Atome der Carboxylgruppe sind dabei mitgezählt. Besonders gut geeignet sind Ammonium- und Alkylammoniumsalze der Apfelsäure, Adipinsäure, Zitronensäure, Gluconsäure, Glucarsäure, Glucuronsäure, Weinsäure und Maleinsäure. Bevorzugt sind die Ammoniumsalze, insbesondere der Zitronen- und Maleinsäure. Anhand dieser bevorzugten Ausführungsform wird die Erfindung weiter erläutert.

Ammoniumsalze der Zitronensäure und Maleinsäure werden wie gesagt bevorzugt eingesetzt, insbesondere jene Ammoniumsalze der Zitronensäure und Maleinsäure, die bei der Auflösung in wäßriger Lösung einen pH-Wert im Bereich von 6 bis 8 ergeben. Sie lassen sich dadurch herstellen, daß man eine Carbonsäure-Lösung, z. B. Zitronensäure- beziehungsweise Maleinsäurelösung mit Ammoniak oder Salmiak-Geist versetzt, bis ein pH-Wert im Bereich von 6 bis 8 vorliegt.

Vorteilhaft setzt man das Zitratsalz beziehungsweise Maleatsalz in Form einer wäßrigen Lösung ein. Die Konzentration an Zitrat beziehungsweise Maleat beträgt vorteilhaft mindestens 10 Gew.-%. Sie kann bis hin zur Sättigungskonzentration betragen.

Bevorzugt ist es, daß man das Carbonsäuresalz sofort nach dem Passieren der Reaktionsmischung durch die bei der Carbonisierung verwendete Vorrichtung zumischt. Hierdurch wird besonders effektiv die Bildung unerwünscht großer Kristalle von Bariumcarbonat beziehungsweise Strontiumcarbonat verhindert. Die sofortige Abtrennung des Carbonats ist nicht notwendig.

Vor dem Trocknen, das zweckmäßig im Bereich von 100 bis 150 °C durchgeführt wird, kann man das nach dem Passieren des Homogenisators abgetrennte Carbonat ein- oder mehrmals mit Wasser waschen. Dadurch werden Ammoniumsalze (z. B. Carbonate des Ammoniums beziehungsweise Alkylammoniums) ausgewaschen.

Die Fällung von Bariumcarbonat in der mit Kohlendioxid versetzten Bariumhydroxid-Lösung wird zweckmäßig bei einer Temperatur im Bereich von Raumtemperatur (z. B. 25 °C) bis 130 °C durchgeführt, ebenso die Fällung von Strontiumcarbonat.

Ein weiterer Gegenstand der Erfindung ist das partikelförmige Bariumcarbonat, welches nach dem erfindungsgemäßen Verfahren unter Zusatz eines das Kristallwachstum verhindernden Mittels erhältlich ist und eine BET-Oberfläche im Bereich von 3 bis 30 m²/g, vorzugsweise 3 bis 20 m²/g aufweist, bei welchem mindestens 95 % der Partikel einen Durchmesser ≤ 1,0 µm aufweisen. Entsprechend Gegenstand der Erfindung ist partikelförmiges SrCO₃ mit solcher Verteilung des Partikeldurchmessers, welches eine spezifische Oberfläche von 3 bis 50 m²/g aufweist, wobei es unter Zusatz eines das Kristallwachstum verhindernden Mittels erzeugt worden ist. Vorzugsweise weisen mindestens 99 % der BaCO₃-Partikel beziehungsweise SrCO₃-Partikel einen Durchmesser ≤ 1,0 µm auf. Die Korngrößenbestimmung erfolgt mittels Sedigraph.

Das erfindungsgemäße Barium- beziehungsweise Strontiumcarbonat kann für all jene Zwecke sehr gut verwendet werden, für welche man diese Carbonate technisch einsetzt.

Gut geeignet sind das mikronisierte Barium- bzw. Strontiumcarbonat für die Verwendung in Feststoffreaktionen. Die Carbonate lassen sich z. B. vorteilhaft in solchen Feststoffreaktionen einsetzen, in welchen sie, meist mit anderen Feststoffkomponenten, durch Sintern oder Aufschmelzen, unter Abgabe von Kohlendioxid, umgesetzt werden. Beispielsweise lassen sich die Carbonate für die Herstellung von BaO bzw. SrO enthaltenden oxidkeramischen Bauelementen für elektrische oder magnetische Anwendungen einsetzen, z. B. bei der Herstellung von Thermistoren und Kondensatoren, ebenso bei der Herstellung von oxidkeramischen Supraleitern. Bariumcarbonat eignet sich z. B. für die Herstellung von Yttrium-bariumcuprat-Supraleitermaterial, Strontiumcarbonat für die Herstellung von Wismut-haltigen oxidkeramischen Supraleitern. Bei der Oxidkeramikherstellung, z. B. bei der Herstellung von Bariumtitanaten, Bariumniobaten oder Bariumferriten, wird eine hohe Aktivität des mikronisierten Carbonats beobachtet. Analoges gilt für die Herstellung von Strontium enthaltender Oxidkeramik mit dem mikronisierten Strontiumcarbonat. Natürlich kann man die Carbonate auch für andere übliche Zwecke einsetzen, beispielsweise in der Glasherstellung oder zur Herstellung anderer Barium- bzw. Strontiumverbindungen.

Das Verfahren weist unter Zusatz eines das Kristallwachstum verhindernden Mittels den Vorteil auf, daß man die gebildete SrCO₃- bzw. BaCO₃-Suspension nicht sofort aufarbeiten muß, sondern gewünschtenfalls tagelang stehenlassen kann, ohne daß Kristallwachstum beobachtet wird.

Die folgenden Beispiele sollen die Erfindung weiter erläutern, ohne sie in ihrem Umfang einzuschränken.

### Beispiel 1:

### Herstellung von mikronisiertem Bariumcarbonat

Bariumsulfid aus der Reduktion von Bariumsulfat mit Kohle wurde mit Wasser ausgelaugt. Die resultierende Bariumhydroxid-Lauge besaß eine Konzentration an Ba(OH)₂ von etwa 0,34 mol/l. Die Temperatur betrug etwa 50 °C. Pro Stunde wurden 400 1 dieser Lauge sowie auf 50 °C vorgewärmtes Kohlendioxid in einer Menge von 6 m³/Std. durch einen nach dem Rotor-Stator-Prinzip arbeitenden Mischer durchgeleitet. Die in diesem Mischer durch die ineinandergreifenden Werkzeuge ausgeübten Scher-, Schub- und Reibungskräfte auf das ausfallende Bariumcarbonat bewirken, daß sehr kleine Partikel an Bariumcarbonat gebildet werden. Die Bariumcarbonat-Suspension, die den Homogenisator verließ, wurde ohne Nachreaktion mit entionisiertem Wasser gewaschen, zur Feststoffabtrennung zentrifugiert und bei etwa 110 °C getrocknet. Der Zusatz eines das Kristallwachstum verhindernden Mittels erfolgte nicht.

Das erhaltene Produkt wurde hinsichtlich der BET-Oberfläche und der Partikelgrößenverteilung untersucht. Die durchschnittliche BET-Oberfläche betrug 9,8 m²/g, in bezug auf die Partikelgrößenverteilung wurde festgestellt, daß 90 % der Partikel im Bereich einer Größe von 0,2 bis 0,7 µm lagen.

### Beispiel 2:

Beispiel 1 wurde wiederholt mit einer Laugenkonzentration von 0,5 mol pro Liter. Das Ergebnis entsprach dem in Beispiel 1 erhaltenen Ergebnis.

### Beispiel 3:

Beispiel 1 wurde wiederholt, diesmal lagen die Temperatur der Lauge und des Kohlendioxids vor der Kontaktierung bei 80 °C. Das erhaltene Ergebnis entsprach dem in Beispiel 1 erhaltenen Ergebnis.

### Beispiel 4:

Herstellung von mikronisiertem Bariumcarbonat; Ammoniumzitrat-Konzentration im Produkt: 0,5 Gew.-% bezogen auf das als 100 Gew.-% gesetzte BaCO₃.

Herstellung der Ammoniumzitrat-Lösung:
930 g Zitronensäure wurden in 2 l entionisiertem Wasser aufgelöst und mit einer 25 Gew.-% NH₃ enthaltenden Salmiak-Lösung bis zum Erreichen eines pH-Wertes von 6,8 versetzt (dazu wurde ca. 1 l der Salmiak-Lösung verbraucht).

Herstellung der Ba(OH)₂-Lösung und Carbonisierung:
Bariumsulfid aus der Reduktion von Bariumsulfat mit Kohle wurde mit Wasser ausgelaugt. Die resultierende Bariumhydroxid-Lauge wurde auf eine Konzentration an Ba(OH)₂ von etwa 0,34 mol/l eingestellt. Die Temperatur betrug etwa 50 °C. Pro Stunde wurden 400 l dieser Lauge sowie auf 50 °C vorgewärmtes Kohlendioxid in einer Menge von 6 m³/Std. durch einen Homogenisator durchgeleitet. Die in diesem Homogenisator ausgeübten Scher-, Schub- und Reibungskräfte auf das ausfallende Bariumcarbonat bewirken, daß sehr kleine Partikel an Bariumcarbonat gebildet werden. Die Bariumcarbonat-Suspension, die den Homogenisator verließ, wurde mit der Ammoniumzitrat-Lösung versetzt. Die Menge der Lösung wurde so bemessen, daß im fertigen Produkt 0,5 Gew.-% Zitratsalz, bezogen auf das als 100 Gew.-% gesetzte BaCO₃, enthalten war. Das Gemisch von BaCO₃-Suspension und Zitrat-Lösung wurde dann mit entionisiertem Wasser gewaschen, zur Entwässerung zentrifugiert und bei etwa 130 °C getrocknet. Anschließend wurde vermahlen.

Das erhaltene Produkt wurde hinsichtlich der BET-Oberfläche und der Partikelgrößenverteilung untersucht. Die durchschnittliche BET-Oberfläche betrug 11 m²/g, in bezug auf die Partikelgrößenverteilung wurde festgestellt, daß 90 % der Partikel ≤ 0,4 µm, 100 % ≤ 0,7 µm lagen.

### Beispiel 5:

### Zitratkonzentration im Produkt: 2,0 Gew.-%, bezogen auf das als 100 Gew.-% gesetzte BaCO₃

Beispiel 4 wurde wiederholt unter Einstellung einer Zitratkonzentration von 2,0 Gew.-% im Produkt. Das Produkt entsprach dem in Beispiel 4 erhaltenen Produkt.

### Beispiel 6:

### Zitratkonzentration im Produkt: 0,2 Gew.-%

Beispiel 4 wurde wiederholt, diesmal wurde die Zitratkonzentration im fertigen Produkt auf 0,2 Gew.-% Zitratsalz, bezogen auf das als 100 Gew.-% gesetzte BaCO₃, eingestellt. Das erhaltene Produkt entsprach dem in Beispiel 4 erhaltenen Produkt.

### Beispiel 7:

### Herstellung von mikronisiertem BaCO₃ unter Verwendung von Ammoniummaleat

Herstellung der Maleat-Lösung:
In einer 30 Gew.-% Maleinsäure enthaltende wäßrige Lösung wurde eine 25 Gew.-% NH₃ enthaltende Salmiak-Lösung eingegeben, bis ein pH-Wert von 6,8 erreicht war.

Die weitere Vorgehensweise entsprach dem Beispiel 4. Das erhaltene mikronisierte BaCO₃ war dem Produkt von Beispiel 4 vergleichbar, abgesehen davon, daß es Bariummaleat in einer Menge von 0,5 Gew.-%, bezogen auf das als 100 Gew.-% gesetzte BaCO₃ enthielt.

## Patentansprüche

1. Verfahren zur Herstellung von partikelförmigem Erdalkalimetallcarbonat EaCO₃, wobei mindestens 95% der Partikel einen Durchmesser von ≤ 1,0 µm aufweisen und Ea für Ba oder Sr steht, wobei man eine Ea(OH)₂-Lösung mit einer Konzentration von 0,1 bis 0,75 mol/l an Ea(OH)₂ mit CO₂ unter Bildung eines Reaktionsgemisches versetzt, wobei man pro Liter Lösung etwa 2 bis 30 l CO₂-Gas einsetzt, das Reaktionsgemisch durch einen kontinuierlich arbeitenden Mischreaktor leitet, in welchem Scher-, Schub- und Reibungskräfte von ineinandergreifenden Werkzeugen mit hoher Relativgeschwindigkeit auf die Reaktionsmischung einwirken, man nach Passieren des Reaktors aus dem Reaktionsgemisch gebildetes EaCO₃ abtrennt und trocknet.

2. Verfahren nach Anspruch 1, dadurch gekennzeichnet, daß man BaCO₃ herstellt.

3. Verfahren nach Anspruch 1, dadurch gekennzeichnet, daß man das abgetrennte SrCO₃ bzw. BaCO₃ vor dem Trocknen ein- oder mehrmals mit Wasser wäscht.

4. Verfahren nach Anspruch 1, dadurch gekennzeichnet, daß man die Fällung von SrCO₃ bzw. BaCO₃ in der mit CO₂ versetzten Lösung bei einer Temperatur im Bereich von 0 °C bis 130 °C, vorzugsweise 40 bis 130 °C durchführt.

5. Verfahren nach Anspruch 1, dadurch gekennzeichnet, daß die Umdrehungszahl des Rotors 2.000 bis 8.000 U/min beträgt.

6. Verfahren nach Anspruch 1, dadurch gekennzeichnet, daß die Verweilzeit des Reaktionsgemisches im Mischreaktor bis 5 sec beträgt.

7. Verfahren nach Anspruch 1, dadurch gekennzeichnet, daß man vor, während und/oder nach der Fällung ein das Kristallwachstum verhinderndes Mittel zusetzt.

8. Verfahren zur Herstellung von partikelförmigem BaCO₃ oder SrCO₃ gemäß Anspruch 1 oder 7, dadurch gekennzeichnet, daß man unter Verwendung eines das Kristallwachstum verhindernden Mittels ausgewählt aus der Gruppe umfassend Ammoniumsalze und Alkylammoniumsalze von Carbonsäuren, die insgesamt 3 bis 12 C-Atome sowie mindestens 2 COOH-Gruppen oder mindestens 2 OH-Gruppen aufweisen, eine Ea(OH)₂-Lösung mit einer Konzentration von 0,1 bis 0,75 mol/l an Ea(OH)₂ mit CO₂ unter Bildung eines Reaktionsgemisches versetzt, wobei man pro Liter Lösung etwa 2 bis 30 l CO₂ -Gas einsetzt, das Reaktionsgemisch durch einen Mischreaktor leitet, in welchem Scher-, Schub- und Reibungskräfte auf die Reaktionsmischung einwirken, man nach Passieren der Vorrichtung aus dem Reaktionsgemisch gebildetes EaCO₃, nämlich BaCO₃ oder SrCO₃ abtrennt und trocknet.

9. Verfahren nach Anspruch 8, dadurch gekennzeichnet, daß man ein Ammoniumsalz oder Alkylammoniumsalz der Zitronensäure, der Apfeisäure, Adipinsäure, Gluconsäure, Glucarsäure, Glucuronsäure, Weinsäure oder Maleinsäure, vorzugsweise ein Ammoniumsalz der Zitronen- oder Maleinsäure einsetzt.

10. Verfahren nach Anspruch 9, dadurch gekennzeichnet, daß man Ammoniumzitrat oder -maleat verwendet, welches man durch Einleiten von NH₃ oder durch Zusatz wäßriger NH₃-Lösung in wäßrige Zitronensäurelösung oder Maleinsäurelösung bis zum Erreichen eines pH-Wertes von 6 bis 8 hergestellt hat.

11. Verfahren nach Anspruch 8, 9 oder 10, dadurch gekennzeichnet, daß man das Carbonsäuresalz in Form einer wäßrigen Lösung einsetzt.

12. Verfahren nach Anspruch 8, dadurch gekennzeichnet, daß man das Carbonsäuresalz in einer Menge von mindestens 0,01 Gew.-%, vorzugsweise 0,01 bis 5 Gew.-%, bezogen auf das hergestellte EaCO₃ oder das herzustellende EaCO₃ einsetzt.

13. Verfahren nach Anspruch 8, dadurch gekennzeichnet, daß man das Carbonsäuresalz sofort nach dem Passieren der Reaktionsmischung durch den Reaktor zumischt.

14. Partikelförmiges BaCO₃ mit einer BET-Oberfläche im Bereich von 3 bis 30 m²/g, SrCO₃ mit einer BET-Oberfläche im Bereich von 3 bis 50 m²/g, wobei mindestens 95 %, vorzugsweise mindestens 99 %, insbesondere 100 % der Partikel einen Durchmesser ≤ 1,0 µm aufweisen, erhalten nach einem Verfahren der Ansprüche 1 bis 13 unter Verwendung von das Kristallwachstum verhindernden Mitteln, ausgewählt aus der Gruppe umfassend Ammoniumsalze und Alkylammoniumsalze von Carbonsäuren, die insgesamt 3 bis 12 C-Atome sowie mindestens 2 COOH-Gruppen oder mindestens 2 OH-Gruppen aufweisen.

15. BaCO₃ oder SrCO₃ nach Anspruch 1, dadurch gekennzeichnet, daß Ammoniumsalze oder Alkylammoniumsalze der Apfelsäure, Adipinsäure, Zitronensäure, Gluconsäure, Glucarsäure, Glucuronsäure, Weinsäure oder Maleinsäure verwendet wurden.

16. Partikelförmiges BaCO₃ mit einer BET-Oberfläche im Bereich von 3 bis 30 m²/g, partikelförmiges SrCO₃ mit einer BET-Oberfläche im Bereich von 3 bis 50 m²/g, wobei mindestens 90 % der Partikel einen Durchmesser im Bereich von 0,1 bis 1,0 µm aufweisen, erhalten nach dem Verfahren der Ansprüche 1 bis 6, und welches frei von das Kristallwachstum verhindernden Mitteln ist.

17. Verwendung von Bariumcarbonat gemäß Anspruch 14, 15 oder 16 für thermische Feststoffreaktionen, insbesondere zur Herstellung von oxidhaltigen Keramikmaterialien für elektrische und magnetische Anwendungen, insbesondere zur Herstellung von oxidischen Supraleitern, von Thermistoren, Kondensatoren.

18. Verwendung von Strontiumcarbonat gemäß Anspruch 14, 15 oder 16 für thermische Feststoffreaktionen, insbesondere zur Herstellung von oxidhaltigen Keramikmaterialien für elektrische und magnetische Anwendungen, insbesondere zur Herstellung von oxidischen Supraleitern, von Thermistoren, Kondensatoren.

## Claims

1. A process for the production of particulate alkaline-earth metal carbonate AeCO₃, wherein at least 95% of the particles have a diameter of ≤ 1.0 µm and Ae stands for Ba or Sr, wherein an Ae(OH)₂ solution having a concentration of 0.1 to 0.75 mol/l of Ae(OH)₂ is mixed with CO₂ to form a reaction mixture, wherein about 2 to 30 l CO₂ gas is used per litre solution, the reaction mixture is passed through a continuously-operating stirred-tank reactor in which shear, transverse and frictional forces of meshing tools act on the reaction mixture at a high relative speed, and after passing through the reactor AeCO₃ formed from the reaction mixture is separated off and dried.

2. A process according to Claim 1, characterised in that BaCO₃ is produced.

3. A process according to Claim 1, characterised in that the SrCO₃ or BaCO₃ separated off is washed one or more times with water before drying.

4. A process according to Claim 1, characterised in that the precipitation of SrCO₃ or BaCO₃ in the solution to which CO₂ has been added is performed at a temperature in the range from 0°C to 130°C, preferably 40 to 130°C.

5. A process according to Claim 1, characterised in that the speed of rotation of the rotor is 2,000 to 8,000 rpm.

6. A process according to Claim 1, characterised in that the dwell time of the reaction mixture in the stirred-tank reactor is up to 5 seconds.

7. A process according to Claim 1, characterised in that an agent preventing crystal growth is added before, during and/or after the precipitation.

8. A process for the production of particulate BaCO₃ or SrCO₃ according to Claim 1 or 7, characterised in that, using an agent preventing crystal growth, selected from the group comprising ammonium salts and alkylammonium salts of carboxylic acids which have a total of 3 to 12 C atoms and at least 2 COOH groups or at least 2 OH groups, an Ae(OH)₂ solution having a concentration of 0.1 to 0.75 mol/l of Ae(OH)₂ is mixed with CO₂ to form a reaction mixture, wherein about 2 to 30 l CO₂ gas is used per litre of solution, the reaction mixture is passed through a stirred-tank reactor in which shear, transverse and frictional forces act on the reaction mixture, and after passing through the device AeCO₃ formed from the reaction mixture, namely BaCO₃ or SrCO₃, is separated off and dried.

9. A process according to Claim 8, characterised in that an ammonium salt or alkylammonium salt of citric acid, malic acid, adipic acid, gluconic acid, glucaric acid, glucuronic acid, tartaric acid or maleic acid, preferably an ammonium salt of citric or maleic acid, is used.

10. A process according to Claim 9, characterised in that ammonium citrate or ammonium maleate is used which has been produced by the introduction of NH₃ or by the addition of aqueous NH₃ solution to aqueous citric acid solution or maleic acid solution until a pH value of 6 to 8 is achieved.

11. A process according to Claim 8, 9 or 10,
characterised in that the carboxylic acid salt is used in the form of an aqueous solution.

12. A process according to Claim 8, characterised in that the carboxylic acid salt is used in a quantity of at least 0.01% by weight, preferably 0.01 to 5% by weight, relative to the AeCO₃ which is produced or which is to be produced.

13. A process according to Claim 8, characterised in that the carboxylic acid salt is admixed immediately after the reaction mixture has passed through the reactor.

14. Particulate BaCO₃ having a BET surface area in the range from 3 to 30 m²/g, SrCO₃ having a BET surface area in the range from 3 to 50 m²/g, wherein at least 95%, preferably at least 99%, in particular 100% of the particles have a diameter of ≤ 1.0 µm, obtained according to a process of Claims 1 to 13 using agents which prevent crystal growth, selected from the group comprising ammonium salts and alkylammonium salts of carboxylic acids which have a total of 3 to 12 C atoms and at least 2 COOH groups or at least 2 OH groups.

15. BaCO₃ or SrCO₃ according to Claim 1, characterised in that ammonium salts or alkylammonium salts of malic acid, adipic acid, citric acid, gluconic acid, glucaric acid, glucuronic acid, tartaric acid or maleic acid were used.

16. Particulate BaCO₃ having a BET surface area in the range from 3 to 30 m²/g, particulate SrCO₃ having a BET surface area in the range from 3 to 50 m²/g, wherein at least 90% of the particles have a diameter in the range from 0.1 to 1.0 µm, obtained according to the process of Claims 1 to 6, and which is free of agents which prevent crystal growth.

17. The use of barium carbonate according to Claim 14, 15 or 16 for thermal solids reactions, in particular for the production of oxide-containing ceramic materials for electrical and magnetic applications, in particular for the production of oxidic superconductors, thermistors and capacitors.

18. The use of strontium carbonate according to Claim 14, 15 or 16 for thermal solids reactions, in particular for the production of oxide-containing ceramic materials for electrical and magnetic applications, in particular for the production of oxidic superconductors, thermistors and capacitors.

## Revendications

1. Procédé de préparation d'un carbonate de métal alcalino-terreux de forme particulaire de EaCO₃, dans lequel au moins 95 % des particules présentent un diamètre inférieur ou égal à 1,0 µm et Ea représente Ba ou Sr, dans lequel on mélange une solution d'Ea (OH)₂ ayant une concentration de 0,1 à 0,75 moles/ litre en Ea (OH)₂ avec CO₂ avec formation d'un mélange réactionnel; dans lequel on utilise par litre de solution environ 2 à 30 litres de gaz CO₂, on conduit le mélange réactionnel à travers un réacteur de mélange fonctionnant de façon continue, dans lequel des forces de cisaillement, de poussée axiale et de frottement d'outils qui s'engrènent agissent avec une vitesse relative élevée sur le mélange réactionnel, on sépare du mélange réactionnel l'EaCO₃ formé après passage du réacteur et on sèche.

2. Procédé selon la revendication 1, caractérisé en ce qu'on prépare BaCO₃.

3. Procédé selon la revendication 1, caractérisé en ce qu'on lave une ou plusieurs fois avec de l'eau le SrCO₃ ou selon les cas le BaCO₃ séparé avant de le sécher.

4. Procédé selon la revendication 1, caractérisé en ce qu'on effectue la précipitation de SrCO₃ ou selon les cas de BaCO₃ dans la solution mélangée avec CO₂ à une température comprise entre 0°C et 130°C; de préférence entre 40 et 130°C.

5. Procédé selon la revendication 1, caractérisé en ce que la rotation du rotor est comprise de 2000 et 8000 tours/minute.

6. Procédé selon la revendication 1, caractérisé en ce que le temps de séjour du mélange réactionnel dans le réacteur de mélange atteint jusqu'à 5 secondes.

7. Procédé selon la revendication 1, caractérisé en ce qu'avant, pendant et/ou après précipitation, on ajoute un agent empêchant la croissance des cristaux.

8. Procédé de préparation de BaCO₃ ou de SrCO₃ particulaire selon la revendication 1 ou 7, caractérisé en ce qu'en utilisant un agent empêchant la croissance des cristaux choisi dans le groupe comprenant des sels d'ammonium et des sels d'alkylammonium d'acides carboxyliques, qui présentent au total 3 à 12 atomes de carbone, ainsi qu'au moins deux groupes COOH ou au moins deux groupes OH, on mélange une solution d'Ea (OH)₂ ayant une concentration de 0,1 à 0,75 moles/litre d'Ea (OH)₂ avec CO₂ avec formation d'un mélange réactionnel, opération dans laquelle on utilise par litre de solution environ 2 à 30 litres de gaz CO₂, on conduit le mélange réactionnel à travers un réacteur de mélange dans lequel des forces de cisaillement, de poussée axiale et de frottement s'exercent sur le mélange réactionnel, après passage du dispositif on sépare du mélange réactionnel l'EaCO₃ formé, à savoir le BaCO₃ ou le SrCO₃, et on sèche.

9. Procédé selon la revendication 8, caractérisé en ce qu'on utilise un sel d'ammonium ou un sel d'alkylammonium de l'acide citrique, de l'acide malique, de l'acide adipique, de l'acide gluconique, de l'acide glucarique, de l'acide glucuronique, de l'acide tartrique ou de l'acide maléique, de préférence un sel d'ammonium de l'acide citrique ou de l'acide maléique.

10. Procédé selon la revendication 9, caractérisé en ce qu'on utilise du citrate ou du maléate d'ammonium, que l'on a préparé par introduction de NH₃ ou par addition d'une solution aqueuse de NH₃ dans une solution aqueuse d'acide citrique ou une solution d'acide maléique jusqu'à ce qu'on ait atteint un pH de 6 à 8.

11. Procédé selon la revendication 8, 9 ou 10, caractérisé en ce qu'on utilise le sel d'acide carboxylique sous la forme d'une solution aqueuse.

12. Procédé selon la revendication 8, caractérisé en ce qu'on utilise le sel d'acide carboxylique en une quantité d'au moins 0,01 % en poids, de préférence de 0,01 à 5 % en poids, par rapport à l'EaCO₃ préparé ou à l'EaCO₃ à préparer.

13. Procédé selon la revendication 8, caractérisé en ce qu'on mélange le sel d'acide carboxylique immédiatement après le passage du mélange réactionnel à travers le réacteur.

14. BaCO3 particulaire avec une surface BET comprise entre 3 et 30 m²/g, SrCO₃ ayant une surface BET comprise entre 3 et 50 m²/g, où au moins 95 %, de préférence au moins 99 %, en particulier 100 % des particules présentent un diamètre inférieur ou égal à 1,0 µm, obtenu selon un procédé des revendications 1 à 13 avec utilisation d'agents empêchant la croissance des cristaux, choisis dans le groupe comprenant des sels d'ammonium et des sels d'alkylammonium d'acides carboxyliques, qui présentent au total 3 à 12 atomes de carbone, ainsi qu'au moins deux groupes COOH ou au moins deux groupes OH.

15. BaCO₃ ou SrCO₃ selon la revendication 1, caractérisé en ce qu'on utilise des sels d'ammonium ou des sels d'alkylammonium de l'acide malique, de l'acide adipique, de l'acide citrique, de l'acide gluconique, de l'acide glucarique, de l'acide glucuronique, de l'acide tartrique ou de l'acide maléique.

16. BaCO₃ particulaire ayant une surface BET comprise entre 3 et 30 m²/g, et SrCO₃ particulaire ayant une surface BET comprise entre 3 et 50 m²/g, où au moins 90 % des particules présentent un diamètre compris entre 0,1 et 1,0 µm, obtenu selon le procédé des revendications 1 à 6, et qui est dépourvu d'agents empêchant la croissance des cristaux.

17. Utilisation de carbonate de baryum selon la revendication 14, 15 ou 16, pour des réactions thermiques en phase solide, en particulier pour la fabrication de matériaux céramiques contenant un oxyde pour applications électriques et magnétiques, en particulier pour la fabrication de supraconducteurs par oxydation, de thermistors, de condensateurs.

18. Utilisation de carbonate de strontium selon la revendication 14, 15 ou 16, pour des réactions thermiques en phase solide, en particulier pour la fabrication de matériaux céramiques contenant un oxyde pour applications électriques et magnétiques, en particulier pour la fabrication de supraconducteurs par oxydation, de thermistors, de condensateurs.
